**Europäisches Patentamt**

**European Patent Office**

**Office européen des brevets**

(19)

(11) Veröffentlichungsnummer: **0 022 554**
**B1**

(12) # EUROPÄISCHE PATENTSCHRIFT

(45) Veröffentlichungstag der Patentschrift:
**10.11.82**

(51) Int. Cl.³: **C 01 B 25/10**

(21) Anmeldenummer: **80103917.3**

(22) Anmeldetag: **09.07.80**

(54) **Verfahren zur Herstellung von Phosphorpentachlorid.**

(30) Priorität: **14.07.79 DE 2928599**

(43) Veröffentlichungstag der Anmeldung:
**21.01.81 Patentblatt 81/3**

(45) Bekanntmachung des Hinweises auf die Patenterteilung:
**10.11.82 Patentblatt 82/45**

(84) Benannte Vertragsstaaten:
**BE CH DE FR GB IT LI NL**

(56) Entgegenhaltungen:
**FR-A-2 256 899**
**US-A-1 914 750**

**KIRK-OTHMER ENCYCLOPEDIA OF CHEMICAL**
**TECHNOLOGY, 2. Auflage, Band 15, 1968,**
**John Wiley & Sons NEW YORK (US)**

(73) Patentinhaber: **HOECHST AKTIENGESELLSCHAFT,**
**Postfach 80 03 20, D-6230 Frankfurt/Main 80 (DE)**

(72) Erfinder: **Münster, Gerhard, Dr., Habichtsweg 1,**
**D-6232 Bad Soden am Taunus (DE)**
Erfinder: **Riess, Gerhard, Dr., Heimchenweg 80,**
**D-6230 Frankfurt am Main 80 (DE)**
Erfinder: **Russow, Jürgen, Dr., Am Schieferberg 45,**
**D-6233 Kelkheim (Taunus) (DE)**

### Verfahren zur Herstellung von Phosphorpentachlorid

Die Erfindung betrifft ein Verfahren zur Herstellung von Phosphorpentachlorid aus Phosphortrichlorid und Chlor.

Bei der technischen Herstellung von Phosphorpentachlorid wird Chlorgas in flüssiges Phosphortrichlorid unter Rühren eingeleitet (Ullmann, Enzyklopädie d. techn. Chemie, 3. Auflage, Band 13, Seite 563 [1962]). Durch die Reaktionswärme verdampft ein Teil des Phosphortrichlorids, während aus der flüssigen Phase festes Phosphorpentachlorid ausfällt. Nach Beendigung der Reaktion liegt Phosphorpentachlorid als feinkörniges Granulat vor.

Ein weiteres bekanntes Verfahren arbeitet in der Weise, dass in einem Turm auf eine Schicht Phosphorpentachlorid Phosphortrichlorid aufgesprüht wird, während von unten im Gegenstrom Chlorgas zugeführt wird und das feste Phosphorpentachlorid unten mittels Schnecken ausgetragen wird (Kirk-Othmer, Encyclopedia of Chemical Technology, 2nd Edition, Vol. 15, p. 307 [1968]). Der Austrag kann auch kontinuierlich erfolgen.

Nach der DE-A 2 461 905 wird Phosphorpentachlorid aus Phosphortrichlorid mit einem Unterschuss an Chlor hergestellt, von der Mutterlauge abgetrennt und durch Trocknen oder Nachchlorieren von den letzten Spuren Phosphortrichlorid befreit.

Die bekannten Verfahren haben den Nachteil, dass sie zumeist nur diskontinuierlich betrieben werden können, da das kontinuierliche Ausschleusen von $PCl_5$, sei es als Granulat oder als Kristallbrei in $PCl_3$, zu Verstopfungen der Austragsorgane führen kann. Ein Teil des Phosphortrichlorids verdampft auch stets durch die Reaktionswärme oder es bleibt in Form einer an Verunreinigungen angereicherten Mutterlauge zurück, welche zumeist erst nach einer Reinigungsoperation wieder in den Prozess zurückgeführt werden kann. Die Ausbeute bei einmaliger Umsetzung ist daher nicht quantitativ. Schliesslich entsteht bei der Reaktion von dampfförmigem $PCl_3$ mit Chlorgas, z.B. gegen Ende der Chlorierungsphase, staubfeines $PCl_5$, das zu erheblichen Belästigungen Anlass geben kann, wenn es in grösserer Menge in dem granulierten Produkt enthalten ist.

Es bestand daher die Aufgabe, ein Verfahren zur Herstellung von Phosphorpentachlorid zu finden, das die Nachteile der bekannten Verfahren vermeidet. Gegenstand der Erfindung ist somit ein Verfahren zur Herstellung von Phosphorpentachlorid aus Phosphortrichlorid und Chlor, das dadurch gekennzeichnet ist, dass man die Reaktionspartner in Gegenwart einer Schmelze aus Phosphorpentachlorid bei einem Druck von 1,05 bis 30 bar und einer Temperatur von 160 bis 250°C umsetzt und das Reaktionsprodukt als Schmelze aus dem Reaktor abzieht.

Phosphorpentachlorid schmilzt erst bei einem Druck von 1,05 bar und einer Temperatur von 160°C. Das Verfahren arbeitet vorzugsweise bei Drucken von 1,05 bis 10 bar und vorzugsweise bei Temperaturen von 160° bis 210°C. Höhere Drucke bringen keinen besonderen Vorteil mehr, während höhere Temperaturen die Dissoziation des Phosphorpentachlorids begünstigen. Phosphortrichlorid und Chlor werden im stöchiometrischen Verhältnis in den Reaktor eingespeist. Dabei ist es nicht erforderlich, die Chlormenge genau zu dosieren, sondern man lässt bei einem vorgebenen Gesamtdruck im Reaktor, der höher sein muss als der Partialdruck der Phosphorchloride, Chlor in dem Masse zuströmen, wie es durch die Reaktion verbraucht wird. Phosphortrichlorid wird beispielsweise mit einer Membranpumpe in den Reaktor eingepeist, wobei die Einleitung durch ein abgetauchtes Rohr in die Schmelze oder vorzugsweise in den Gasraum oberhalb der Schmelze erfolgt. Chlor kann gasförmig oder auch flüssig in die Schmelze oder vorzugsweise ebenfalls in den Gasraum eingeleitet werden. Die Reaktionswärme kann in bekannter Weise durch Mantelkühlung, Kühlschlangen oder Wärmetauscher abgeführt werden.

Das Verfahren lässt sich sowohl absatzweise als auch teil- oder vollkontinuierlich durchführen. Beim absatzweisen Betrieb werden Phosphortrichlorid und Chlor in den Reaktor z.B. einen mit Rührwerk ausgestatteten Email- oder Edelstahlkessel, eingespeist, bis ein vorgegebener Füllstand erreicht ist. Sodann wird das flüssige Phosphorpentachlorid abgelassen und in bekannter Weise, z.B. mittels Kühlwalzen, Kühlbändern oder durch Sprühkristallisation granuliert. Es ist aber bevorzugt die Reaktanden kontinuierlich zuführen und das Reaktionsprodukt von Zeit zu Zeit oder vollkontinuierlich als Schmelze abziehen und granulieren.

Das nach dem erfindungsgemässen Verfahren hergestellte Phosphorpentachlorid ist über 99%ig und enthält höchstens 1% Phosphortrichlorid. Die Erfindung wird in den nachstehenden Beispielen erläutert.

Beispiel 1

In einem 1-l-Edelstahlrührautoklaven (Werkstoff Nr. 1.4571) mit Heiz- bzw. Kühlmantel, 2 Zuleitungen für $PCl_3$ und Chlor, Manometer, Thermometerhülse und Bodenventil wurden 630 g Phosphorpentachlorid vorgelegt und durch Erhitzen im verschlossenen Gefäss auf 180°C mit einem Ölumlaufthermostaten aufgeschmolzen. Nun wurden mittels einer Membrandosierpumpe ca. 200 ml/h Phosphortrichlorid eindosiert und Chlor aus einer Stahlflasche aufgedrückt, wobei sich ein Druck von 5-6 bar einstellte. Die Innentemperatur stieg hierbei durch die Reaktionswärme auf 200-210°C an. Die Schmelze von Phosphorpentachlorid wurde in Abständen von jeweils 15 min durch das Bodenventil in ein auf 160°C beheiztes graduiertes zylindrisches 1-l-Druckgefäss aus Glas abgelassen, in dem ein Überdruck von ca. 0,5 bar aufrechterhalten wurde, so dass das $PCl_5$ flüssig blieb. Pro Stunde wurde etwa die der zudosierten Menge an $PCl_3$ entsprechende Menge flüssiges $PCl_5$ abgelassen, d.h. ca. 300 ml/h $PCl_5$. Dadurch wurde der Stand im Reaktionsgefäss annähernd konstant gehalten. Nach 3 h waren insgesamt 588 ml $PCl_3$ eindosiert worden und 950 ml $PCl_5$ abgelassen worden. Nach dem Erkalten wurde das $PCl_5$ aus dem Glas-Druckgefäss entfernt und eine Probe davon analysiert. Sie enthielt 0,65% $PCl_3$.

Beispiel 2

Es wurde dieselbe Apparatur wie in Beispiel 1 verwendet, nur wurde das flüssige $PCl_5$ in offene 1-l-Zweihalskolben aus Glas bei Normaldruck abgelassen. Zu Beginn wurde das leere Reaktionsgefäss auf 180°C erwärmt und die Dosierung des Phosphortrichlorids mit 400 ml/h angestellt. Anschliessend wurde Chlor aus der Stahlflasche aufgedrückt. Durch schwaches Erwärmen der Chlorflasche auf ca. 30-40°C liess sich ein Druck von 6-7 bar im Reaktionsgefäss erreichen. Die Temperatur der Ölumlaufheizung des Thermostaten wurde nun auf 160°C herabgesetzt und 1 h Phosphortrichlorid eindosiert, bis das Reaktionsgefäss etwa zur Hälfte mit $PCl_5$ gefüllt war. Bei diesem Stand wurde in halbstündigen Intervallen jeweils die der zudosierten Menge $PCl_3$ entsprechende Menge $PCl_5$, d.h. ca. 400-500 g, in den vorher angewärmten Glaskolben abgelassen, wo es mit der Zeit erstarrte. Die Reaktionstemperatur lag bei 195-200°C. Nach 6 h waren insgesamt 2265 ml $PCl_3$ eindosiert worden und 5190 g $PCl_5$ abgelassen worden, wobei das Reaktionsgefäss am Ende des Versuches völlig geleert wurde. Die Ausbeute betrug 96%. Verluste entstanden durch verdampfendes $PCl_5$ beim Ablassen der Schmelze unter Normaldruck. Das Produkt enthielt 0,4% $PCl_3$.

**Patentansprüche**

1. Verfahren zur Herstellung von Phosphorpentachlorid aus Phosphortrichlorid und Chlor, dadurch gekennzeichnet, dass man die Reaktionspartner in Gegenwart einer Schmelze aus Phosphorpentachlorid bei einem Druck von 1,05 bis 30 bar und bei einer Temperatur von 160°C bis 250°C umsetzt und das Reaktionsprodukt als Schmelze aus dem Reaktor abzieht.

2. Verfahren nach Anspruch 1, dadurch gekennzeichnet, dass man die Reaktionspartner kontinuierlich in das Reaktionsgefäss einführt und das Reaktionsprodukt kontinuierlich abzieht.

3. Verfahren nach einem der Ansprüche 1 oder 2, dadurch gekennzeichnet, dass man das Reaktionsprodukt in eine unter Druck stehende Vorlage abzieht.

**Revendications**

1. Procédé de préparation du pentachlorure de phosphore à partir du trichlorure de phosphore et du chlore, procédé caractérisé en ce qu'on fait réagir les partenaires réactionnels en présence d'une masse fondue constituée de pentachlorure de phosphore, sous une pression de 1,05 à 30 bar et à une température de 160 à 250°C, et on retire du réacteur le produit réactionnel à l'état fondu.

2. Procédé selon la revendication 1, caractérisé en ce qu'on introduit les partenaires réactionnels continuellement dans le récipient réactionnel et on soutire continuellement le produit.

3. Procédé selon l'une des revendications 1 et 2, caractérisé en ce que le produit réactionnel soutiré est recueilli dans un récipient sous pression.

**Claims**

1. Process for the manufacture of phosphorus pentachloride from phosphorus trichloride and chlorine, which comprises reacting the reaction partners in the presence of a melt of phosphorus pentachloride at a pressure of from 1,05 to 30 bars and at a temperature of from 160°C to 250°C and removing the reaction product as a melt from the reactor.

2. Process according to Claim 1, wherein the reaction partners are introduced continuously into the reaction vessel and the reaction product is removed continuously.

3. Process according to any one of the Claims 1 or 2, wherein the reaction product is removed into a pressurized recipient.